# EUROPEAN PATENT APPLICATION

(11) **EP 3 866 083 A1**
(43) Date of publication of application: **18.08.2021**
(21) Application number: 21151018.5
(22) Date of filing: 11.01.2021
(51) Int. Cl.: G06Q 10/06, G06Q 10/08, G06Q 50/12

(54) **AUTOMATIC FRESH GOODS PREPARATION**

(30) Priority: 13.02.2020 GB 202001999
(71) Applicant: Illinois Tool Works INC., Glenview, IL 60025 (US)
(72) Inventor: CARTWRIGHT, Kevin, Smethwick, West Midlands B66 2LP (GB)
(74) Representative: HGF

(57) **Abstract**

A control apparatus for ordering fresh goods, the control apparatus configured to: receive, via an input, data indicative of a fresh goods order from an external ordering device, the fresh goods order indicating one or more items each having an associated preparation time; receive, via an input, data indicative of a collection time at which the fresh goods order is to be collected; calculate an order preparation initiation time at which preparation of the fresh goods order is to commence, in dependence on the associated preparation time of each of the one or more items, and the collection time; and provide, via an output, data indicative of the order preparation initiation time

## Description

### FIELD OF INVENTION

The present invention relates to intelligent time-sensitive information management, for example relating to automatically providing commands for processing time sensitive data, or controlling apparatus according to time sensitive processing requirements. Some examples disclosed herein relate to automatic fresh goods preparation.

### INTRODUCTION

Fresh goods, such as foods, come in many different variations. Some foods may have a combination of different ingredients, such as a pizza. The ingredients/topping on a pizza, or the selection of types and amounts of food items in a pre-requested grocery order, are largely dependent on the customer's preferences. For example, a customer may have a certain preference to one or more types of toppings. This may be due to allergy or taste preference. The same principle applies to fillings in a sandwich. In view of the different customer preferences, there has been a trend in grocery stores or bakers for customers to have the freedom to choose their own topping or ingredients when building a food product such as a pizza.

Ensuring that food products are prepared for customer collection without a delay between preparation and customer collection is important by ensuring that the food product is not prepared ready for collection too early before customer collection. However, this needs to be balanced with the food being ready and prepared in time for customer collection without the customer being required to wait for the product to be prepared. Avoiding customer queues allows for improved customer service and improved/freer movement of people within and around a building where the fresh goods orders are prepared and provided by reducing the time customers have to spend stood in a queue waiting for their order. A balance must be made between preparing the items ready for collection, without the items being prepared too far in advance that the items may spoil and lose their freshness.

A device or technique is required that allows an order of fresh goods to be placed by a customer, and that order to be fulfilled in a timely way to ensure the customer can collect their fresh goods order in a state of freshness without them needing to wait for the order to be prepared at the preparation site.

### SUMMARY OF THE INVENTION

The present invention may address the above problem by providing a control apparatus for ordering fresh goods. The control apparatus is configured to: receive, via an input, data indicative of a fresh goods order from an external ordering device, the fresh goods order indicating one or more items each having an associated preparation time; receive, via an input, data indicative of a collection time at which the fresh goods order is to be collected; calculate an order preparation initiation time at which preparation of the fresh goods order is to commence, in dependence on the associated preparation time of each of the one or more items, and the collection time; and provide, via an output, data indicative of the order preparation initiation time.

The control apparatus may be configured to provide the data indicative of the order preparation time to an order fulfilment device configured to allow the fresh goods order to be prepared for collection from an order collection point. The control apparatus may be configured to provide the data indicative of the order preparation time to a plurality of order fulfilment devices, and, on receiving an indication that order preparation has commenced at one of the plurality of order fulfilment devices, cause removal of the indication of the order preparation time from the remaining plurality of order fulfilment devices.

The collection time may be based on a calculation factor comprising at least one of: a specified collection time; a specified delay; an indication of a mobile device of a collecting user connecting to a local communication network of an order collection point; location information of a mobile device of a collecting user; and semantic information acquired from at least one application of the external ordering device. The "specified" collection time or delay may be specified, for example, by the ordering user or collecting user.

The calculation factor may comprise the location information, and the location information may be to be used with a geofence to calculate the collection time, wherein the geofence indicates a distance to travel to the order collection point in a time equal to the order preparation initiation time of the fresh goods order. "Equal to" may be equal, or may be within a predetermined tolerance threshold, e.g. a number of minutes, or a percentage of the preparation time for the order.

The distance to travel to the order collection point from the geofence may be determined using a calculated speed of travel of a collecting user, wherein the speed of travel is one or more of: determined according to a mode of transport of the collecting user; determined using a time averaged rate of change of the collection user location; and determined according to a predetermined route to the order collection point.

The calculation factor may comprise the semantic information. The semantic information may comprise at least one of: an item history of items in the fresh goods order; a history of previous order collection times; and a history of previously used order collection point locations. The semantic information may be acquired from a scheduling application, and the semantic information may comprise at least one of: an appointment time; an appointment location; and an appointment fulfilment status. The semantic information may comprise determining a direction of travel of the collecting user. For example, a collecting user may be within a geofence, but for the purposes of attending an appointment and not for the purposes of collecting the fresh goods order, so that may be taken into consideration in determining the order collection time.

The collection time may be indicated to be as soon as possible following receipt of the fresh goods order, and the order preparation initiation time may be determined to be the time of receipt of the fresh goods order. For example, a fresh goods order (i.e. data indicative of the fresh goods order) may be transmitted to the control apparatus while the person placing the order is at, or close to, the collection point for the order. That user may want to collect their ordered goods as soon as possible because they are present at/close to the point of collection. In such a case, the collection time is the time of receipt of the fresh goods order plus the order preparation time (i.e. the time to prepare the order, based on the associated preparation times of the ordered fresh items and any time dependencies of order preparation, such as a requirement to prepare items sequentially rather than in parallel).

The control apparatus may be configured to transmit via an output, to the external ordering device, data indicative of a fresh goods order update when at least one of: the calculation of the order preparation initiation time is complete; the collection time is updated; or the indication of the order preparation initiation time has been provided.

The control apparatus may be configured to update the fresh goods order by: receiving a removal indication that one or more items are removed from the fresh goods order; determining that the removal indication has been received before the indication of the order preparation initiation time associated with the removed one or more items has been provided; and removing the one or more items from the fresh goods order.

The control apparatus may be configured to update the fresh goods order by: receiving an addition indication that one or more items are added to the fresh goods order; calculating a new collection time based on an associated preparation time of the added one of more items; comparing the new collection time with the current collection time; and if the new collection time is before the current collection time, adding the one or more items from the fresh goods order. If the new collection time is after the current collection time, the control apparatus may be configured to transmit a notification that the one or more items can not be added to the fresh goods order.

The control apparatus may be configured to, following the one or more of removal or addition of the one or more items from the fresh goods order: re-calculate the order preparation initiation time of each of the fresh goods order in dependence on the preparation time of each of the one or more items, and the collection time; and provide, via the output, data indicative of the updated order preparation initiation time.

The associated preparation time of each of the one of more items may be stored on at least one memory device.

The control apparatus may be configured to dynamically update the calculated order preparation initiation time when the calculation factor is updated. The control apparatus may be configured to dynamically update the calculated order preparation initiation time when a time period since a previous calculation factor update exceeds a predetermined value.

The data indicative of the order preparation initiation time may be provided to one or more of: an order fulfilment device; an order collection point; and the external ordering device.

In another aspect, there is provided a controller for ordering fresh goods, wherein the controller comprises: at least one electronic processor having an electrical input for receiving data indicative of a a fresh goods order from an external ordering device, the fresh goods order indicating one or more items each having an associated preparation time; receive data indicative of a collection time at which the fresh goods order is to be collected; and at least one memory device electrically coupled to the at least one electronic processor and having instructions stored therein; wherein the at least one electronic processor is arranged to access the at least one memory device and execute the instructions thereon so as to: calculate an order preparation initiation time at which preparation of the fresh goods order is to commence, in dependence on the associated preparation time of each of the one or more items, and the collection time; and provide an indication of the order preparation initiation time.

In another aspect, there is provided a computer-implemented method for ordering fresh goods, the method consisting of: receiving data indicative of a fresh goods order from an external ordering device, the fresh goods order indicating one or more items each having an associated preparation time; receiving data indicative of a collection time at which the fresh goods order is to be collected; calculating an order preparation initiation time at which preparation of the fresh goods order is to commence, in dependence on the associated preparation time of each of the one or more items, and the collection time; and providing date indicative of the order preparation initiation time.

In another aspect, there is provided a computer readable storage medium including instructions to perform a method comprising: receiving, via an input, data indicative of a fresh goods order from an external ordering device, the fresh goods order indicating one or more items, each having an associated preparation time; receiving, via an input, data indicative of a collection time at which the fresh goods order is to be collected; calculating an order preparation initiation time at which preparation of the fresh goods order is to commence, in dependence on the associated preparation time of each of the one or more items, and the collection time; and providing via an output, data indicative of the order preparation initiation time.

### BRIEF DESCRIPTION OF THE DRAWINGS

One or more examples will now be described, by way of example only, with reference to the accompanying drawings, in which:
Figure 1 show an example of a control apparatus according to examples disclosed herein;
Figure 2 shows an example of a control apparatus providing an order preparation initiation time to a plurality of external devices according to examples disclosed herein;
Figure 3 shows an example of calculating an order preparation initiation time according to examples disclosed herein;
Figure 4 shows an example of determining an order preparation initiation time according to a collecting user location in accordance with an embodiment of the invention;
Figure 5 shows an example controller according to examples disclosed herein;
Figure 6 shows a computer readable medium according to examples disclosed herein; and
Figure 7 shows an example method of providing an order preparation initiation time according to examples disclosed herein.

### DETAILED DESCRIPTION

The present invention relates to a control system for time-sensitive information management and handling goods which have a specified lifetime, in particular in relation to ordering fresh goods, such as pizzas, to enable on-time production. Food products such as pizzas and sandwiches come in many different types, with a wide range of different types of toppings, fillings or ingredients added to a pizza base or for filling bread. Such toppings or ingredients vary and may be largely chosen by a customer.

In a fast-moving environment, such as a delicatessen where the grocery or food store needs to attend to a large number of customers, the store, in particular the chef, must ensure that the correct ingredients are obtained according to a customer's order, and that those ingredients are obtained at an appropriate time. For example, many fresh goods require particular handling to ensure the food order is fit for sale and consumption and retains the expected flavour. If, for example, a fresh food item is prepared for an order too early before the order is collected by the customer, then problems may arise with the product. For example, a frozen food item may need to be kept below a particular freezing temperature until, at most, 30 minutes before customer collection, to ensure the food remains sufficiently frozen before the customer stores the item in their home freezer. As another example, a deep-coloured fresh topping on a pizza (e.g. sun-dried tomato, black olive, anchovy) may need to be kept isolated from other toppings because it causes food colour to leak from the topping onto the rest of the pizza, making it look unsightly or unappetising. As another example, an item such as a sandwich may require a customer to collect it within a particular time from preparation (e.g. 10 minutes) because it contains a wet sandwich filling (e.g. mayonnaise, sauerkraut) which would cause the bread to go soggy and unappetising if left for longer. As another example, if a sliced item such as cheese or meat is sliced from a large piece of cheese or joint of meat, the sliced food may retain an appetising texture for a short amount of time after slicing before it starts to dry out and/or discolour through exposure to air, which is undesirable.

Ensuring that food products are prepared for customer collection without a delay between preparation and customer collection is important by ensuring that the food product is not prepared ready for collection too early before customer collection. However, this needs to be balanced with the food being ready and prepared in time for customer collection without the customer being required to wait for the product to be prepared - that is, the product should be just ready for customer collection at the time of collection. This effect may be considered to be "queue avoidance", i.e. reducing the amount of customer's waiting for an order, and reducing the waiting time of those customers. In particular, if catering to a large number of customers in a store, it is important to prevent customers waiting too long for their food product.

A balance must be made between preparing the items ready for collection, without the items being prepared too far in advance that the items may spoil.

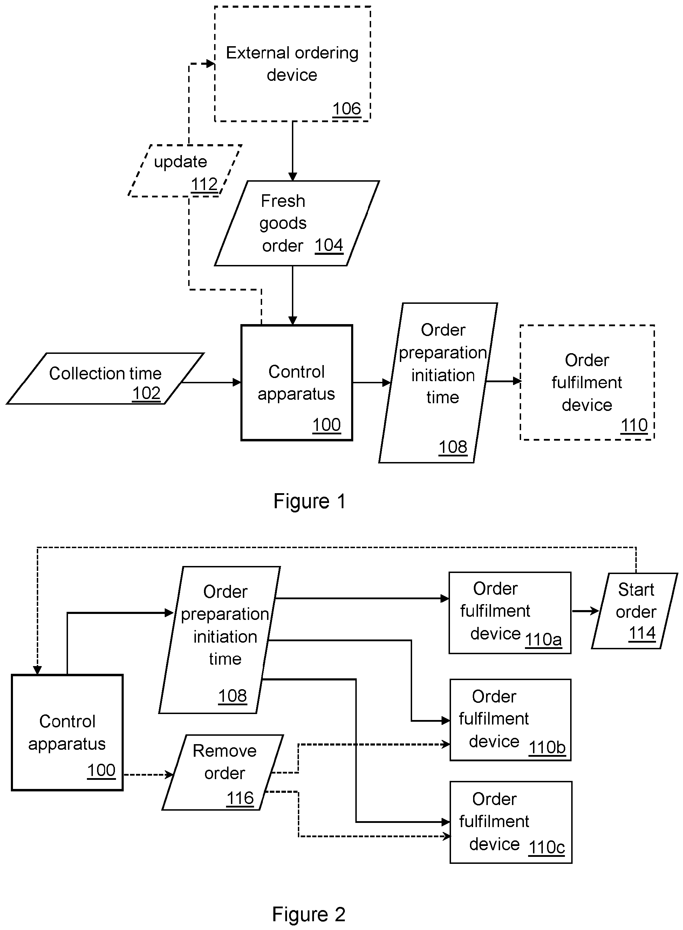

The present invention may address the problem of ensuring timely fresh goods order preparation by a control apparatus 100, as example of which is shown in Figure 1. The term "fresh goods order" throughout this disclosure may mean the input list of fresh goods items to be assembled/prepared for collection, or may mean the final assembled/prepared items ready for collection, as the context requires. The control apparatus 100 is configured to receive a fresh goods order 104 (i.e. receive, via an input, data indicative of the fresh goods order) from an external ordering device 106. The fresh goods order 104 indicates one or more items each having an associated preparation time. The fresh goods order 104 may be received from an external ordering device 106, for example a remote computer, including a mobile device, or at an in-store order point. For example, a customer may pick items and place an order using a website or application on their mobile telephone, table computer, or desktop computer. As another example, a customer may telephone an ordering service and speak to an operator who enters the customer's order onto an ordering computer for transmission to the control apparatus 100. As another example, a customer may be able to select items in a fresh goods order 104 at an in-store order point, such as a touchscreen ordering device or at an order desk.

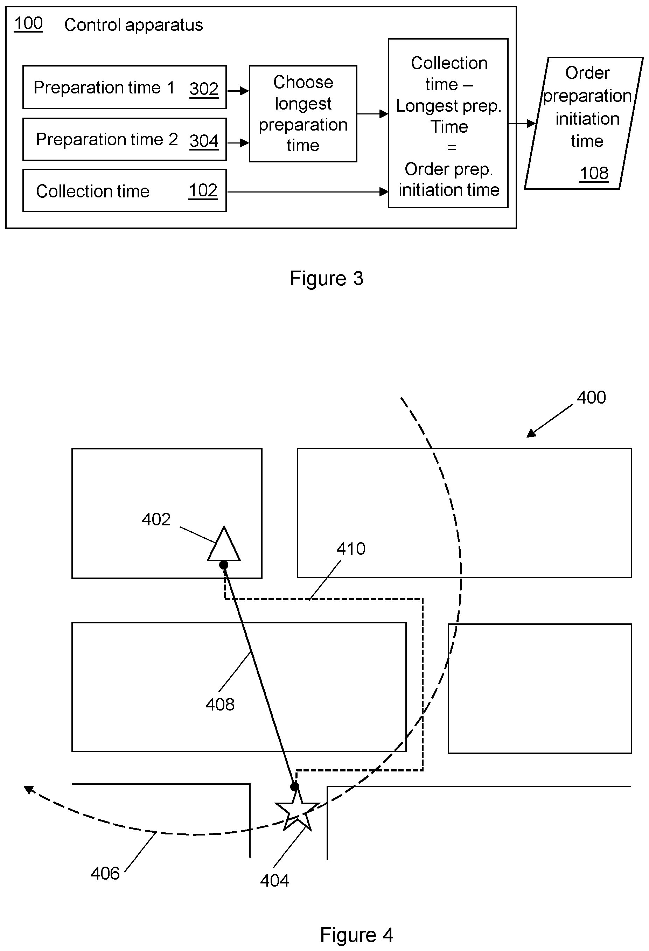

The control apparatus 100 is configured to receive a collection time 102 (i.e. receive, via an input, data indicative of the collection time) at which the fresh goods order is to be collected. For example, the collection time may be based on a calculation factor as discussed in more detail with reference to Figure 3. The calculation factor reflects a timing consideration which may affect the time at which the customer can collect their prepared fresh goods order.

The control apparatus 100 is configured to then calculate an order preparation initiation time 108 at which preparation of the fresh goods order is to commence, in dependence on the associated preparation time of each of the one or more items, and the collection time 102. The associated preparation time of each of the one of more items may be stored on at least one memory device, for example at the control apparatus 100, or at a memory device storing a database, look up table, or similar, in communication with the control apparatus 100.

The control apparatus 100 then provides an indication of the order preparation initiation time 108 (i.e. provides, via an output, data indicative of the order preparation initiation time), for example to an order fulfilment device 110 configured to allow the fresh goods order to be prepared for collection from an order collection point. As another example, the indication may be provided to an order collection point to indicate when the order will start to be prepared. For example, the order collection point may receive the indication and use it to determine a countdown to the time when the order will be ready for collection. To aid order management such information may help to organise the movement of prepared items such as pizzas and sandwiches to a refrigerated collection zone for collection.

As another example, the indication may be provided to the external ordering device 106. A customer may have placed the order using a personal mobile device and may appreciate, for example, an update 112 of the progress of their order by receiving an indication that their order has commenced preparation, an indication of what time preparation of their order will start, or an indication of how long it will take to prepare their order, which may be based on the order preparation initiation time 108. The control apparatus 100 may be configured to transmit, to the external ordering device 106, a fresh goods order update 112 (i.e. data indicative of the update) when at least one of: the calculation of the order preparation initiation time 108 is complete; the collection time 102 is updated; or the indication of the order preparation initiation time 108 has been provided, for example to an order fulfilment device 110.

In some examples, a customer may pay for the fresh goods order at the time of confirming the order (causing it to be sent to the control apparatus 100). In some cases, the user may wish to order, for example, six slices of ham, at a price of "no more than £1.80". If paying at the time of ordering (i.e. before fresh goods preparation) then the user may pay the £1.80 maximum specified price, and the prepared product may have a price within a predetermined tolerance of the user-specified price (e.g. in this example, up to 5% less, or up to 10p less, than the maximum specified prove of £1.80). That is, the final prepared goods may cost £1.76 or £1.79, as the price will depend on the final weight. There are various possible methods by which the discrepancy between the pre-paid price and the actual price may be rectified. For example, the customer may be able to pay with a pre-authorisation to ensure sufficient customer funds are available, and the final payment may be made after order preparation wen the actual final price is known. As another example, the customer may wish to place orders within a predetermined a price range, and any net difference between the paid price and actual price may donated to charity, stored as in-store credit, stored for use against a subsequent order, for example.

The collection time in some examples may be as soon as possible following receipt of the fresh goods order. For example, a user may place a fresh goods order at or close to the site where the order is being prepared, and/or were it will be ready for collection. The order preparation initiation time may be determined to be the time of receipt of the fresh goods order in such examples. For example, a person may place a fresh goods order at an ordering kiosk in a store. Since that person is in the store present to collect the order, they may wish to collect the order as soon as possible. In such a case, the collection time as soon as possible - that is, the collection time is the time of receipt of the fresh goods order plus the time required to prepare the order. Thus "as soon as possible" means the time taken to prepare the fresh goods order, dependent on the associated preparation times of the ordered fresh items and any requirement for sequential (e.g. tomato base must be placed on a pizza base before cheese and/or other topping are added) rather than parallel (e.g. plural frozen items may be retrieved for a grocery order at the same or similar time) preparation of items, starting from the time of order placement (i.e. the time of receipt of the fresh goods order at the control apparatus). The user may be informed of what time the order will be ready as determined from the associated preparation times of the ordered fresh items.

In some examples, even if the collection time is determined to be "as soon as possible", there will be some time before placing the fresh goods order and the order being ready for collection because it will take time to prepare the order. If a customer places an order for collection "as soon as possible", the control apparatus may be configured to provide a notification that the order has been prepared to the collecting user, for example, via transmission of an SMS or other message to the collecting user's mobile device, via a push notification from "supermarket application" or other application (e.g. the application used to place the fresh goods order) on the user's mobile device, or via a portable "buzzer" which the user may collect in store and which buzzes when the order is ready for collection to attract the user's attention. The user may also receive one or more updated during order preparation such as "the order preparation has now started" or "your order is only 5 minutes from being ready", with such notifications being based on the calculations of order preparation inanition time and expected collection time based on the preparation time of the items in the order.

In some examples, the user may place the fresh goods order at or close to the location of order collection (e.g. in store). However, the user may not wish the order to be ready "as soon as possible" because, for example, they wish to do some other shopping first, or stop for a coffee break in the store cafe first. In such cases the user may be able to specify some delay on order, such as "please be prepared for collection in 30-45 minutes time" or "please have the order ready for collection after 1 hour from the time of order". This delay may then be factored in to the calculation of order preparation initiation time so the order can be completed ready for collection just as the user is free to collect the order, rather than preparing the order earlier than required and waiting for collection (which may adversely affect the freshness of the prepared goods). As above, the user may be alerted when their order is ready for collection, via receiving a notification message for example.

Figure 2 shows an example of a control apparatus 100 providing an order preparation initiation time 108 to a plurality of external order fulfilment devices 110a-c. For example, a fresh goods order 104 may be a pizza order for a pizza with a selection of toppings. There may be a plurality of pizza making stations (i.e. order fulfilment devices) which can each be used to prepare the pizza order. Once one of the plurality of pizza making stations 110a is available for making the pizza order, an indication 114 may be generated to indicate that order preparation has commenced.

The pizza making station 110a (i.e. the one of the plurality of order fulfilment devices used to make the pizza order) may generate an "order received" signal 114 and may send it back to the control apparatus 100. The control apparatus 100 may have access to a waiting list indicating that an order is pending acceptance by an order fulfilment device 110a-c and, once the pending order has left the waiting list, this provides the indication that the order preparation has commenced. Once the order preparation has commenced at one of the order fulfilment devices 110a, the control apparatus 100 can cause removal of the indication of the order preparation time from the remaining plurality of order fulfilment devices, for example by sending a "remove order" 116 signal to the remaining order fulfilment devices 110b-c. Determining which order fulfilment devices receive the order preparation initiation time 108 in advance of the order being accepted by one these devices may include consideration of any devices in the plurality which are already in the process of preparing an order. For example, new orders (order preparation initiation times) may be sent to order fulfilment devices which are not already currently processing/fulfilling an order, or which have not already been selected to fulfil a previously-handled order at the order preparation initiation time 108 of the current fresh goods order 104.

In some examples, the control apparatus 100 may provide functionality to allow for removal or addition of a fresh goods item from a fresh goods order 104. For example, the control apparatus 100 may be configured to update the fresh goods order 104. The control apparatus 100 may receive a removal indication that one or more items are removed from the fresh goods order 104. For example, a customer may change their mind and want to remove a pizza topping or a sandwich filling from their previously placed pizza or sandwich order. As another example, a user may have placed a fresh goods order 104 for deli items such as hams or cheeses, before realising that they already had one of the items in the fridge at home and wish to take that item off the order. The user may be able to amend their order from the external ordering device 106 used to place their order (e.g. their laptop computer), or from another external ordering device 106 in communication with the control apparatus 100 (e.g. their mobile phone). The control apparatus 100 may, having received the removal indication, determine that the removal indication has been received before the indication of the order preparation initiation time 108 associated with the removed one or more items has been provided. That is, the control apparatus 100 can remove the item from the fresh goods order 104 if the order preparation initiation time 108 has not already been transmitted e.g. to an order fulfilment device to prepare the order. Then, the control apparatus 100 may remove the one or more items from the fresh goods order 104 in time for preparation of the amended order to be prepared.

The control apparatus 100 may be configured to update the fresh goods order 104 by receiving an addition indication that one or more items are added to the fresh goods order 104. For example, a user may realise after placing a fresh goods order 104 that they forgot to add one or more items (e.g. an additional pizza topping to a pizza order, an additional fresh good such as milk to a grocery order). The control apparatus 100 can calculate a new collection time based on an associated preparation time of the added one of more items. The control apparatus 100 may calculate the new collection time by comparing the new collection time accounting for the added item, with the current collection time 102, and if the new collection time is before the current collection time 102, the control apparatus 100 may add the one or more items from the fresh goods order 104. For example, it may take an additional 5 minutes to include an additional pizza topping. If there is sufficient time (i.e. there is an available extra 5 minutes) to include the new item to the order, the new item may be added to the order. If the new collection time is after the current collection time 102, the control apparatus 100 may be configured to transmit a notification that the one or more items can not be added to the fresh goods order 104.

The control apparatus 100 may be configured to, following the removal and/or addition of the one or more items from the fresh goods order 104, re-calculate the order preparation initiation time 108 of each of the fresh goods order 104 in dependence on the preparation time of each of the one or more items, and the collection time 102, and provide an indication of the updated order preparation initiation time 108 (e.g. to the order fulfilment device).

Figure 3 shows an example of calculating an order preparation initiation time 108 by the control apparatus 100. For example, a fresh goods order 104 may contain two items having two preparation times: "preparation time 1" 302 and "preparation time 2" 304. The control apparatus 100 also has a collection time 102 indicating a time when the order is due to be collected. The control apparatus 100 may choose the preparation time required to fulfil the order based on the longest preparation time for an individual item on the fresh goods order 104. Based on the maximum amount of time required to prepare all the items on the fresh goods order 104 (in this example on the basis of the time required to prepare the item requiring the most time), and subtracting this time from the collection time 102, an order preparation initiation time 108 may be determined.

As another example requiring a cumulative time period for order preparation to be determined, a user may order a pizza with fresh cheese and tomato topping. The choose may require 10 minutes to grate and add to the pizza base, and the tomatoes may require 5 minutes to add to the pizza but must be added after the cheese has been added. Thus an order preparation period may be calculated as 10 minutes + 5 minutes = 15 minutes. If the pizza is to be collected at 9pm, an order preparation initiation time of 8:45pm (i.e. 9pm minus 15 minutes) may be calculated.

As another example, involving maximum and minimum preparation times, a grocery fresh goods order 104 may contain a freshly prepared sushi tray, which takes 30 minutes to prepare and cannot be prepared more than one hour in advance, and a bottle of wine, which takes 5 minutes to collect ready for customer collection but which has a shelf life of several weeks. A collection time of 7pm may be provided to the control apparatus 100. The control apparatus 100 may determine that order commencement may, at best, start 30 minutes prior to the collection time, and therefore an order preparation initiation time of 6:30 pm may be calculated. A buffer order preparation time may also be determined based on an available window of preparation time allowing for the fresh goods order 104 to be prepared according to maximum and minimum preparation times of each item in the order. For example, the control apparatus 100 may determine preparation earlier than 30 minutes, but no earlier than one hour prior to collection, may also be made. This may be useful, for example, if other order preparation considerations need to be managed beyond food freshness such as chef availability, item collection time requirements or storage space requirements.

The collection time 102 may be used by the control apparatus 100 to determine an order preparation initiation time 108 as described above. The collection time 102 may be based on a calculation factor. The calculation factor 102 may, in some examples, comprise a specified collection time 102. For example, when placing an order, the user may state "I will collect this order at 5pm", thus 5pm is a specified collection time 102. The calculation factor 102 may, in some examples, comprise a specified delay. For example, a user may indicate a delay by transmitting a message to the control apparatus 100 to indicate "will collect half an hour later than stated". The "specified" collection time 102 or delay may therefore be specified, for example, by the ordering user or collecting user. In some examples, there may not be an explicit user intervention to transmit a delay indication to the control apparatus 100. For example, if the location of the user is used to determine the collection time 102, information relating to traffic delays on the user's route may be used to determine an expected delay to the user's arrival time and this expected delay may be provided to the control apparatus 100 to indicate a collection time 102 later than the originally provided collection time 102.

The calculation factor 102 may, in some examples comprise an indication of a mobile device of a collecting user connecting to a local communication network of an order collection point. For example, a user may collect a prepared fresh goods order from a designated order collection point, such as a collection locker used to store the prepared fresh goods order, or from a collection kiosk or counter. The collecting user's mobile device (which may or may not be the external ordering device 106 used to transmit the fresh goods order 104 to the control apparatus 100) may be linked to the user's fresh goods order 104 (for example, through a user ID or user device ID). When the user's mobile device is within communication range of an order collection point (e.g. over a Local Area Network, Bluetooth, Bluetooth Low Energy, or short range Wireless Network) it may be detected (through communication connection being established, or being able to be established, between the user's mobile device and the communication network associated with the order collection point). This may trigger the control apparatus 100 to determine that the user will be present to collect their fresh goods order from that order collection point within a predetermined time period (e.g. 10 minutes). Thus, connection of the user's device to the order collection point causes the control apparatus 100 to determine that the user will collect their order from that order collection point within a predetermined time.

Figure 4 shows an example of determining an order preparation initiation time 108 according to a collecting user's location 404. Figure 4 shows a schematic view of a map 400 on which the collection point 402 from which the completed fresh goods order is to be collected is marked, and the current location of the collecting user 404 is also marked. The distance "as the crow flies" 408 between the collection point 402 and user location 404, and the distance 410 along designated pathways/roads is also shown. A geofence 406 is also indicated showing a distance away from the order collection point.

The calculation factor 102 used to determine the order preparation initiation time 108 may, in some examples comprise location information of a mobile device of a collecting user. For example, if the user's device is determined to be located within a threshold distance (e.g. within the geofence 406) of the order collection point, this may be used to set a collection time 102 at the control apparatus 100 as being a time taken for the user to reach the order collection point from the threshold distance away. The distance may be determined, for example, as an "as the crow flies" distance 408, or may be a distance along user-traversable paths 410 as specified on a map of the local area of the order collection point.

Thus in examples where the calculation factor comprises location information, a geofence 406 may be used with location information 404 to calculate the collection time 102. The geofence 406 indicates a distance to travel 408, 410 to the order collection point 402 in a time equal to the order preparation initiation time 108 of the fresh goods order 104. "Equal to" may be equal, or may be within a predetermined tolerance threshold, e.g. a number of minutes, or a percentage of the preparation time for the order. Of course, other shapes of geofence other than circular may be used, for example to reflect variations in terrain, speed limit, one-way systems, pedestrian-only routes, current weather conditions, or other factors affecting the time taken to travel to the order collection point 402 in the area.

The distance 406, 410 to travel to the order collection point from the geofence 406 may be determined in some examples using a calculated speed of travel of a collecting user 404. The speed of travel may be determined according to a mode of transport of the collecting user. For example, the user may be determined (from map matching the user's location to a transit route on map, for example) to be travelling by a particular mode of transport. For example, if the user's current location is determined to be on a pedestrian footpath area of a map, the user's travel speed may be taken to be an average (or a user-specific) walking speed e.g. 4km/h. The speed of travel may be determined using a time averaged rate of change of the collecting user's location. The speed of travel may be determined according to a predetermined route to the order collection point.

The calculation factor 102 may, in some examples comprise semantic information, for example information acquired from at least one application of the external ordering device 106. The semantic information may comprise an item history of items in the fresh goods order 104. For example, the customer may have ordered the same or similar food items in a previous order and may have left feedback on the freshness of the goods. For example, if the user has previously ordered a frozen item and left feedback that they considered the item had started to defrost by the time they had brought the item back home, this semantic information may be used to amend the order preparation initiation time 108 for a fresh goods order 104 including the same frozen item for the same customer by picking it from the freezer, for packing up in the order for collection, as late as possible.

The semantic information may comprise a history of previous order collection times. For example, if the user usually collects a fresh goods item on a Friday at 6:30pm, then subsequent similar fresh goods ordered for the same user for collection on a Friday may also be prepared in time for collection at 6:30pm. This may be despite other indications that the collection time is different; for example, if based on the location of the user alone an estimated collection time of 6pm is determined. Perhaps the user tends to stop to make a telephone call after arrival at the fresh order collection point but before collecting the order, for example, making the expected collection time later than the collection time based on user location only.

The semantic information may comprise a history of previously used order collection point locations. For example, a user may historically collect their fresh goods order from a particular branch of the store selling the fresh goods, and such historical behaviour may be factored into the determination of an expected collection time. For example it may be better to estimate a collection time at the previously used collection point rather than another collection point determined based on minimum distance between that collection point and the user's house for example. Perhaps the user comes from work to collect the fresh goods order and not their home, so the closest collection point to their home is not the most likely desired collection point to use.

Semantic information used to determine the collection time 102 may comprise determining a direction of travel of the collecting user. For example, a collecting user may be within a geofence, but for the purposes of attending an appointment and not for the purposes of collecting the fresh goods order, so that may be taken into consideration in determining the order collection time.

The semantic information may be acquired from a scheduling application in some example, and may comprise, for example, an appointment time. For example, a user may be determined to be located a 10 minute journey away from the collection point but may also have an appointment scheduled for a particular time. Thus the collection time 102 may be determined to be a time after the scheduled appointment (e.g. after 6pm), even though the user is located 10 minutes away at e.g. 5pm. Other such sematic scheduling information may comprise an appointment location (for example, the user may be located a 10 minute journey away, but be located at the site of a scheduled appointment (e.g. a hairdressers), thus more than only the travel time away from the collection point should be considered when determining an order collection time 102. As another example, an appointment fulfilment status may be used (e.g. is the user actually present at a scheduled appointment).

In some example, the control apparatus 100 may be configured to dynamically update the calculated order preparation initiation time 108 when the calculation factor is updated. The control apparatus 100 may be configured to dynamically update the calculated order preparation initiation time 108 when a time period since a previous calculation factor update exceeds a predetermined value. That is, the control apparatus 100 may periodically check that the order preparation initiation time 108 is up to date and accurate.

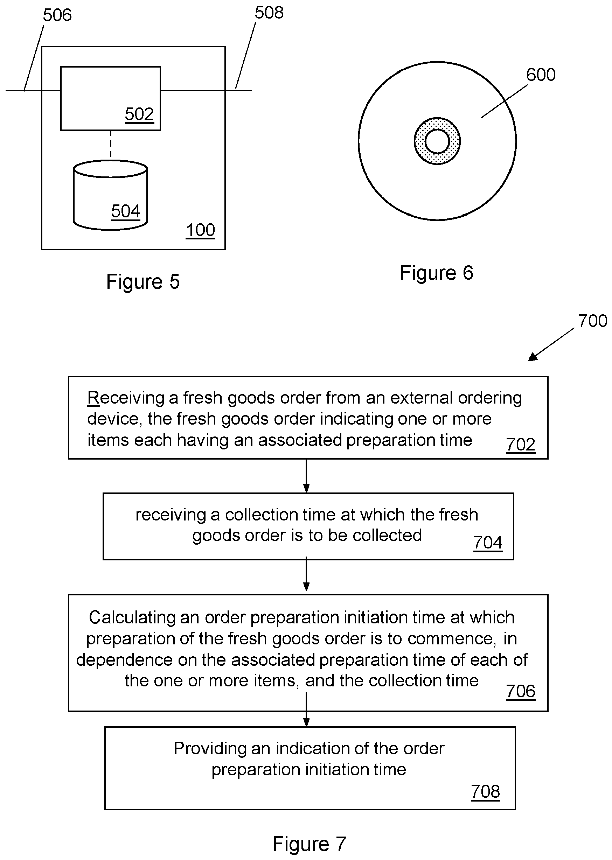

Figure 5 shows an example controller 100 for ordering fresh goods. The controller 100 comprises: at least one electronic processor 502 having an electrical input 506 for receiving data indicative of a fresh goods order 104 from an external ordering device 106, the fresh goods order 104 indicating one or more items each having an associated preparation time; receive data indicative of a collection time at which the fresh goods order 104 is to be collected; and at least one memory device 504 electrically coupled to the at least one electronic processor 502 and having instructions stored therein; wherein the at least one electronic processor 502 is arranged to access the at least one memory device 504 and execute the instructions thereon so as to: calculate an order preparation initiation time 108 at which preparation of the fresh goods order 104 is to commence, in dependence on the associated preparation time of each of the one or more items, and the collection time; and provide data indicative of the order preparation initiation time 108, for example via an electrical output 508.

The controller 100 may comprise one or more electronic processors 502 (e.g., a microprocessor, a microcontroller, an application specific integrated circuit (ASIC), Boolean logic circuitry, etc.) that is configured to execute electronic instructions. The term "controller," "control unit," or "computational device" may be understood to include a single controller, control unit, or computational device, and a plurality of controllers, control units, or computational devices collectively operating to provide the required control functionality.

The set of instructions may be embedded in said one or more electronic processors 502 of the controller 500; may be stored in a memory 504, or may be provided as software to be executed in the controller 500. The memory 504 may comprise any suitable memory device and may store a variety of data, data structures, and/or instructions thereon. For example, the memory 504 may store instructions for software, firmware, programs, algorithms, scripts, applications that may control or cause suitable apparatus to perform all or part of the methodology described herein.

Figure 6 shows a computer readable medium 600 including instructions to perform any method disclosed herein, for example the method of Figure 7. The memory 504 may comprise a computer-readable storage medium 600 such as that illustrated in Figure 6 (e.g. a non-transitory, non-volatile or non-transient storage medium) that may comprise any mechanism for storing information in a form readable by a machine or electronic processors/computational devices, including, without limitation: a magnetic storage medium (e.g. floppy diskette); optical storage medium (e.g. CD-ROM); magneto optical storage medium; read only memory (ROM); random access memory (RAM); erasable programmable memory (e.g. EPROM and EEPROM); flash memory; or electrical or other types of medium for storing such information/instructions.

Figure 7 shows an example computer-implemented method 700 of providing an order preparation initiation time. The method comprises: receiving data indicative of a fresh goods order from an external ordering device 702, the fresh goods order indicating one or more items each having an associated preparation time; receiving data indicative of a collection time at which the fresh goods order is to be collected 704; calculating an order preparation initiation time at which preparation of the fresh goods order is to commence 706, in dependence on the associated preparation time of each of the one or more items, and the collection time; and providing data indicative of the order preparation initiation time 708.

## Claims

1. A control apparatus for ordering fresh goods, the control apparatus configured to:
receive, via an input, data indicative of a fresh goods order from an external ordering device, the fresh goods order indicating one or more items each having an associated preparation time;
receive, via an input, data indicative of a collection time at which the fresh goods order is to be collected;
calculate an order preparation initiation time at which preparation of the fresh goods order is to commence, in dependence on the associated preparation time of each of the one or more items, and the collection time; and
provide, via an output, data indicative of the order preparation initiation time.

2. The control apparatus of claim 1, wherein the control apparatus is configured to provide the data indicative of the order preparation time to an order fulfilment device configured to allow the fresh goods order to be prepared for collection from an order collection point.

3. The control apparatus of claim 2, wherein the control apparatus is configured to provide the data indicative of the order preparation time to a plurality of order fulfilment devices, and, on receiving an indication that order preparation has commenced at one of the plurality of order fulfilment devices, cause removal of the indication of the order preparation time from the remaining plurality of order fulfilment devices.

4. The control apparatus of any preceding claim, wherein the collection time is based on a calculation factor comprising at least one of:
a specified collection time;
a specified delay;
an indication of a mobile device of a collecting user connecting to a local communication network of an order collection point;
location information of a mobile device of a collecting user; and
semantic information acquired from at least one application of the external ordering device.

5. The control apparatus of claim 4, wherein the calculation factor comprises the location information, the location information to be used with a geofence to calculate the collection time, wherein the geofence indicates a distance to travel to the order collection point in a time equal to the order preparation initiation time of the fresh goods order.

6. The control apparatus of claim 5, wherein the distance to travel to the order collection point from the geofence is determined using a calculated speed of travel of a collecting user, wherein the speed of travel is one or more of:
determined according to a mode of transport of the collecting user;
determined using a time averaged rate of change of the collection user location; and
determined according to a predetermined route to the order collection point.

7. The control apparatus of any of claims 4-6, wherein the calculation factor comprises the semantic information, and wherein the semantic information comprises at least one of: an item history of items in the fresh goods order; a history of previous order collection times; and a history of previously used order collection point locations.

8. The control apparatus of any of claims 4-7, wherein the calculation factor comprises the semantic information, and wherein the semantic information is acquired from a scheduling application, the semantic information comprising at least one of: an appointment time; an appointment location; and an appointment fulfilment status.

9. The control apparatus of any preceding claim, configured to transmit via an output, to the external ordering device, data indicative of a fresh goods order update when at least one of: the calculation of the order preparation initiation time is complete; the collection time is updated; or the indication of the order preparation initiation time has been provided.

10. The control apparatus of any preceding claim, configured to update the fresh goods order by:
receiving a removal indication that one or more items are removed from the fresh goods order;
determining that the removal indication has been received before the indication of the order preparation initiation time associated with the removed one or more items has been provided; and
removing the one or more items from the fresh goods order.

11. The control apparatus of any preceding claim, configured to update the fresh goods order by:
receiving an addition indication that one or more items are added to the fresh goods order;
calculating a new collection time based on an associated preparation time of the added one of more items;
comparing the new collection time with the current collection time; and
if the new collection time is before the current collection time, adding the one or more items from the fresh goods order.

12. The control apparatus of any of claims 10-11, wherein the control apparatus is configured to, following the one or more of removal or addition of the one or more items from the fresh goods order:
re-calculate the order preparation initiation time of each of the fresh goods order in dependence on the preparation time of each of the one or more items, and the collection time; and
provide an indication of the updated order preparation initiation time.

13. The control apparatus of any preceding claim, wherein the data indicative of the order preparation initiation time is provided to one or more of: an order fulfilment device; an order collection point; and the external ordering device.

14. A computer-implemented method for ordering fresh goods, the method consisting of:
receiving data indicative of a fresh goods order from an external ordering device, the fresh goods order indicating one or more items each having an associated preparation time;
receiving data indicative of a collection time at which the fresh goods order is to be collected;
calculating an order preparation initiation time at which preparation of the fresh goods order is to commence, in dependence on the associated preparation time of each of the one or more items, and the collection time; and
providing data indicative of the order preparation initiation time.

15. A computer readable storage medium including instructions to perform a method comprising:
receiving, via an input, data indicative of a fresh goods order from an external ordering device, the fresh goods order indicating one or more items, each having an associated preparation time;
receiving, via an input, data indicative of a collection time at which the fresh goods order is to be collected;
calculating an order preparation initiation time at which preparation of the fresh goods order is to commence, in dependence on the associated preparation time of each of the one or more items, and the collection time; and
providing, via an output, data indicative of the order preparation initiation time.
